# EUROPÄISCHE PATENTSCHRIFT

(11) **EP 0 782 935 B1**
(45) Veröffentlichungstag und Bekanntmachung des Hinweises auf die Patenterteilung: **26.09.2001**
(21) Anmeldenummer: 96119907.2
(22) Anmeldetag: 12.12.1996
(51) Int. Cl.: B60C 11/00, G10K 11/16

(54) **Fahrzeug mit Reifen und mit zumindest einer schallabsorbierenden Vorrichtung**
Vehicle with tyres and having at least one noise reducing device
Ensemble formé d'un véhicule et de pneumatiques, et équipé d'au moins un dispositif absorbant le bruit

(30) Priorität: 23.12.1995 DE 19548728
(43) Veröffentlichungstag der Anmeldung: 09.07.1997
(73) Patentinhaber: Continental Aktiengesellschaft, 30165 Hannover (DE)
(72) Erfinder: Dodt, Thomas, Dr.rer.nat., 30455 Hannover (DE); Gauterin, Frank, Dr.rer.nat., 31535 Neustadt/Rbge. (DE)

(56) Entgegenhaltungen:
- EP-A- 0 665 529
- EP-A- 0 680 866
- DE-C- 4 241 518

## Beschreibung

Die vorliegende Erfindung betrifft ein Fahrzeug, insbesondere Kraftfahrzeug, mit Reifen bestückten Rädern und mit zumindest einer am Radkasten angebrachten schallabsorbierenden Vorrichtung, wobei der zugehörige Reifen ein Laufstreifenprofil mit einer Schallabstrahlungscharakteristik mit bevorzugter Schallabstrahlung in und gegen die Fahrtrichtung aufweist.

Zu den als am störendsten empfundenen Lärmquellen zählt der durch den Straßenverkehr verursachte Lärm. Beim Kraftfahrzeug sind die Lärmverursacher Motor und Reifen, wobei auf Schnell- und Pflasterstraßen sowie bei Nässe das Reifen/Fahrbahngeräusch überwiegt, wobei in den letzten Jahren gerade das Reifen/Fahrbahngeräusch zur dominierenden Lärmquelle wurde. LKW-Reifen entwickeln aus konstruktionsbedingten Gründen ein als störender empfundenes Rollgeräusch als PKW-Reifen.

Um den über die Luft übertragenen Anteil des vom Kraftfahrzeug emittierten Reifen/Fahrbahngeräusches zu reduzieren, wurde in jüngster Vergangenheit vorgeschlagen, in den Radkästen der Kraftfahrzeuge schallabsorbierende Vorrichtungen anzubringen. So ist es beispielsweise aus der DE-C-4 241 518 bekannt, am Radkasten eine Umkleidung anzuordnen, die sich aus Kammem zusammensetzt, die als Helmholtzresonatoren ausgebildet sind. Eine weitere, als passiver Schallabsorber wirkende Vorrichtung, die als Lochabsorber ausgeführt sein kann, ist in der DE-A-4 415 983 der Anmelderin beschrieben. In der gattungsbildenden DE-A-4 402 699 (entspricht EP-A-0665 529) der Anmelderin ist eine ebenfalls am Radkasten anzubringende Vorrichtung geoffenbart, die ein System von Schallabsorbern umfaßt, die auf Geräuschanteile im Reifen/Fahrbahngeräusch, deren Frequenzen sich proportional zur Raddrehzahl ändern, abgestimmt und aktiv angepaßt werden kann.

Die am Reifen selbst zur Beeinflussung des Reifen/Fahrbahngeräusches bisher gesetzten Maßnahmen zielen vor allem darauf ab, eine Verteilung der auftretenden Frequenzen auf ein breiteres Frequenzband zu erzielen, was subjektiv als angenehmer empfunden wird, als eine Schallabstrahlung mit vorherrschenden Frequenzen. Zu diesem Zweck wird beispielsweise am Laufstreifenprofil von Reifen das bekannte Verfahren der Pitchlängenvariation angewandt, welches in einzelnen Aspekten immer weiter verbessert wird. Die Kombination aus bekannten herkömmlichen Reifen mit schallabsorbierenden Einrichtungen am Fahrzeug zeigen eine gewisse, wenn auch nicht sehr zufriedenstellende Wirkung.

Die Erfindung hat sich daher die Aufgabe gestellt, die Effektivität von am Radkasten eines Fahrzeuges, insbesondere eines Kraftfahrzeuges, angebrachten schallabsorbierenden Vorrichtungen, signifikant zu verbessern.

Gelöst wird die gestellte Aufgabe erfindungsgemäß durch, die Kombination der Merkmale des Anspruchs 1.

Wenn somit gemäß der gegenständlichen Erfindung der Reifen eine Schallabstrahlungscharakteristik besitzt, bei der eine Schallabstrahlung in ganz bestimmten Richtungen überwiegt, nämlich in Richtung der schallabsorbierenden Vorrichtungen am Fahrzeug, so läßt sich die Effektivität solcher schallabsorbierender Vorrichtungen deutlich erhöhen. Das bedeutet auch, daß sowohl im Nah- als auch im Fernbereich des Fahrzeuges eine wesentlich verringerte Schalleistung feststellbar ist, sodaß die erwähnte Lärmbelästigung weitgehend minimiert wird. Messungen haben ergeben, daß beispielsweise eine Verminderung des Vorbeifahrgeräusches um einige dB erzielt werden kann.

In diesem Zusammenhang sind beispielsweise Reifen mit Laufstreifenprofilausgestaltungen günstig, wo Rillen vorgesehen sind, die beim Abrollen des Reifens im Ein- und Auslauf eine zumindest im wesentlichen gleichphasige Schallabstrahlung bewirken.

Die Kombination eines Reifens mit erfindungsgemäßer Schallabstrahlungscharakteristik und einer als passiver Schallabsorber wirkenden schallabsorbierenden Vorrichtung ist besonders günstig, da auf diese Weise die schallabsorbierende Vorrichtung trotz einfachem Aufbau sehr gut an die Schallabstrahlungscharakteristik des Reifens angepaßt werden kann, um eine weitgehende Schallabsorption bezüglich der auftretenden Frequenzbereiche zu erzielen.

Noch effektiver kann die Kombination mit einer schallabsorbierenden Vorrichtung sein, die aktiv auf Geräuschanteile im Reifen/Fahrbahngeräusch, deren Frequenzen sich proportional zur Raddrehzahl ändern, abstimm- und anpaßbar ist. Durch diese Kombination können sehr gezielt jene störenden Frequenzen, die sich proportional zur Raddrehzahl ändern, minimiert bzw. sogar eliminiert werden. Auf diese Weise lassen sich eine sehr effektvolle Verminderung des Lärmpegels im Nah- und Femfeld des Kraftfahrzeuges sowie auch im Fahrzeuginneren erreichen und tonale Geräusche, die als besonders lästig empfunden werden, weitgehendst vermeiden.

Es steht vor allem eine deutliche Reduzierung der Lärmbelästigung der Bevölkerung im Vordergrund. Die Kombination aus schallabsorbierender Vorrichtung am Fahrzeug und Reifen mit erfindungsgemäßer Schallabstrahlungscharakteristik wird daher bevorzugt an Lastkraftwagen oder Bussen realisiert werden. Ein Einsatz bei Personenkraftwagen ist selbstverständlich auch möglich und sinnvoll.

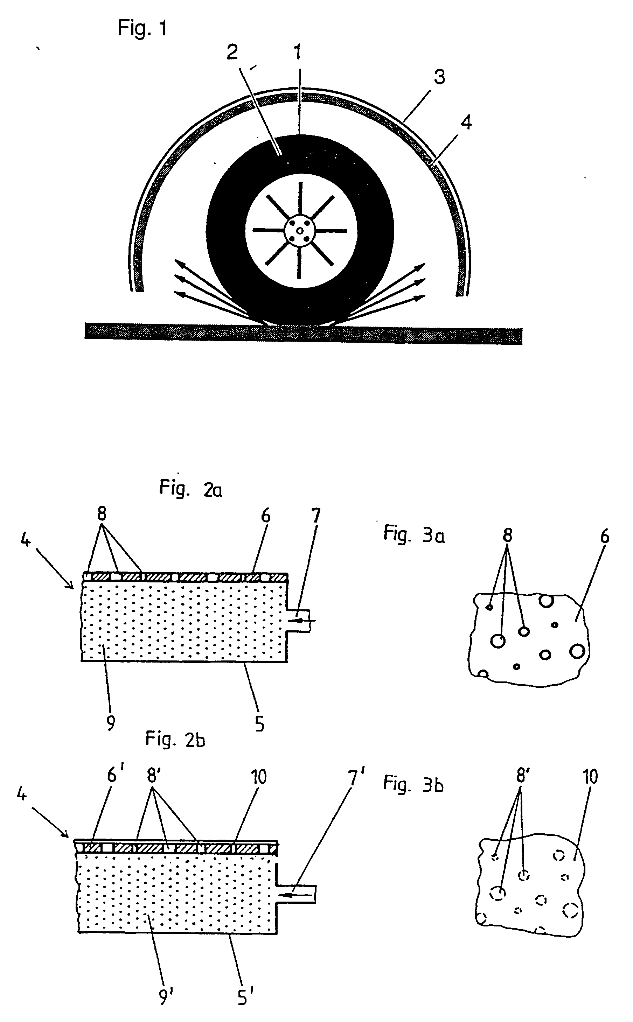

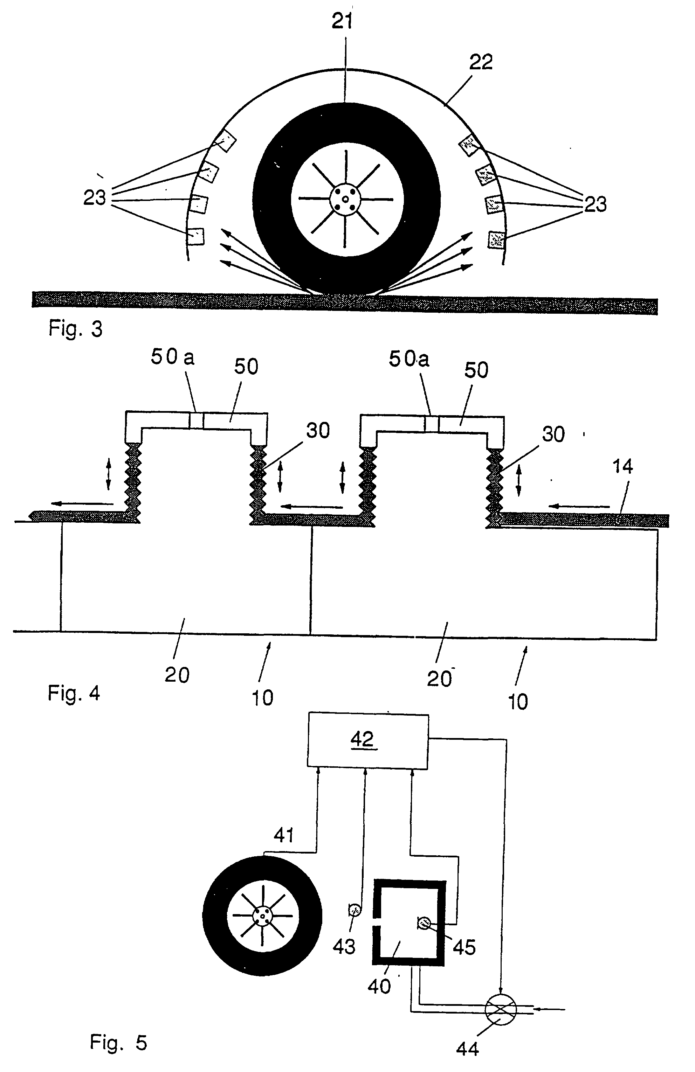

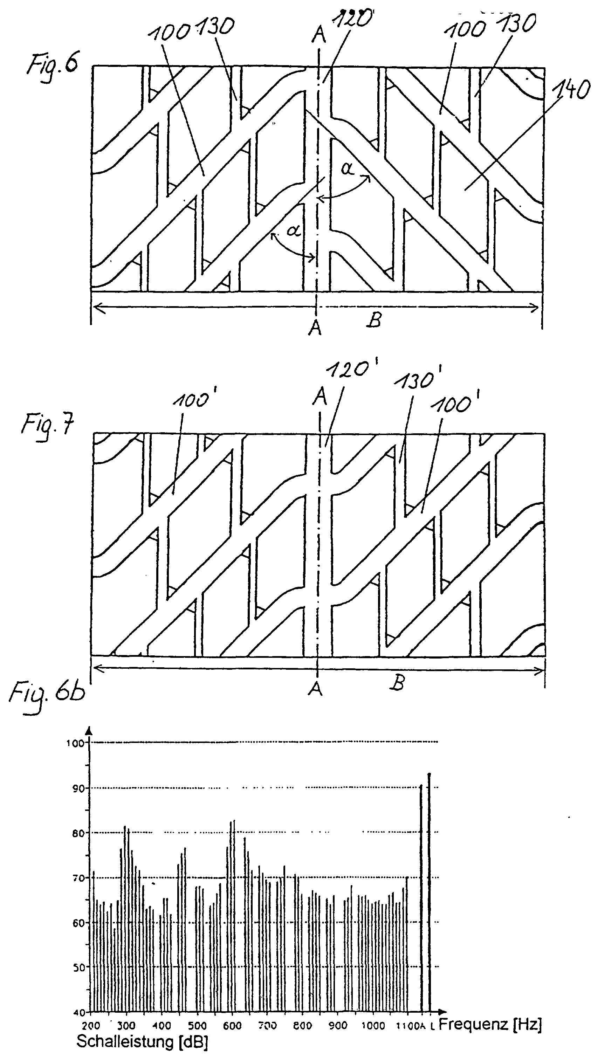

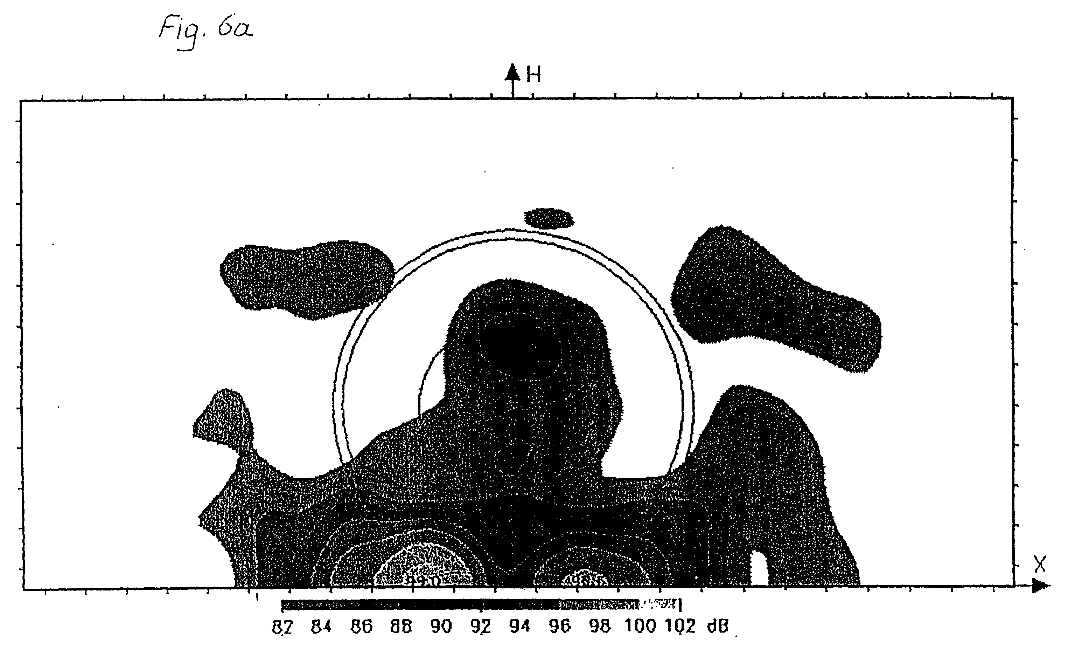

Weitere Merkmale, Vorteile und Einzelheiten der Erfindung werden nun anhand der Zeichnung, die einige Ausführungsbeispiele darstellt, näher beschrieben. Dabei zeigen: Fig. 1 schematisch und in Seitenansicht eine Kombination eines Rades mit Reifen mit darüber angeordnetem Radkasten, der mit einer passiv wirkenden schallabsorbierenden Vorrichtung versehen ist, Fig. 2a, 2b, 3a und 3b zwei mögliche grundsätzliche Ausführungsformen von passiv wirkenden schallabsorbierenden Vorrichtungen für Radkästen, wobei diese Vorrichtungen auch Gegenstand der DE-A 4415983 der Anmelderin sind, Fig. 3 schematisch und in Seitenansicht ein Rad mit Reifen und mit darüber angeordnetem Radkasten, an welchem aktiv abstimm- und anpaßbare Schallabsorber angeordnet sind, Fig. 4 eine mögliche Ausführungsvariante von solchen Schallabsorbern im Schnitt, Fig. 5 das Grundprinzip einer möglichen Steuerung und Regelung von solchen Schallabsorbem, wobei solche Schallabsorber und ihre Regelung bzw. Steuerung Gegenstand der DE-A 4402699 der Anmelderin sind, Fig. 6 und Fig. 7 Ausführungsvarianten von im Rahmen der gegenständlichen Erfindung bevorzugt einsetzbaren prinzipiellen Ausführungsformen von Laufstreifenprofilen, Fig. 6a eine Abbildung einer Schallfeldmessung und Fig. 6b das zugehörige gemessene Frequenzspektrum.

Im folgenden wird vorerst auf beispielhafte Möglichkeiten von Ausführungen von "passiven" oder "aktiven" schallabsorbierenden Vorrichtungen eingegangen.

Fig. 1 zeigt ein Rad 1 mit einem Reifen 2 in Seitenansicht mit einem darüber angeordneten Radkasten 3. Die hauptsächlichen Abstrahlrichtungen des Reifen/Fahrbahngeräusches im Latscheinlauf und im Latschauslauf des Reifens 2 sind durch Pfeilbündel angedeutet. Der Radkasten 3 ist mit einer schallabsorbierenden Vorrichtung 4 versehen, die den Innenwandbereich des Radkastens 3 komplett abdeckt und am Radkasten 3 entsprechend befestigt ist.

Das Ausführungsbeispiel einer solchen schallabsorbierenden Vorrichtung 4 gemäß Fig. 2a und Fig. 3a umfaßt eine Rückwand 5, die dem Radkasten zugeordnet ist bzw. an diesem anliegt und dort befestigt wird und eine Außenhülle 6, wobei zwischen Rückwand 5 und Außenhülle 6 ein Hohlraum verbleibt. Die Außenhülle 6 besteht aus einem biegeweichen, jedoch gegenüber Umwelteinflüssen resistenten und möglichst schlagzähem Material, beispielsweise aus Gummi oder aus einem geeigneten Kunststoff. Die Rückwand 5 kann ebenfalls aus einem solchen Material oder auch einem starren Material, beispielsweise aus einem Kunststoff bestehen, welches in seiner Form dem Radkasten 3 entsprechend angepaßt ist. Alternativ dazu kann der Radkasten 3 selbst die Rückwand bilden. In diesem Fall wird die Außenhülle direkt am Radkasten 3 befestigt. Bei beiden Ausführungsbeispielen ist es ferner möglich, die Rand- bzw. Seitenbereiche der schallabsorbierenden Vorrichtung mit der Rückwand und/oder der Außenhülle mitzubilden oder gesonderte Seitenwandteile vorzusehen.

Die Außenhülle 6 ist mit einer Vielzahl von Löchern 8 versehen, so daß die Vorrichtung als Lochabsorber wirkt, die Außenhülle 6 selbst weist eine Dicke, die insbesondere zwischen 0,5 und 5 mm beträgt, auf. Die Dicke wird entsprechend der erwarteten Beanspruchung gewählt, wobei ferner über die Dicke die Resonanzfrequenz und die Impedanz des Lochabsorbers beeinflußbar ist. Wie Fig. 3a zeigt sind die Löcher 8 bevorzugt mit einem kreisförmigen Querschnitt versehen und weisen verschiedene Durchmesser auf. Bei einer Ausführung mit kreisförmigem Querschnitt wird der Durchmesser der Löcher 8 ≤ 3 mm, insbesondere 0,1 bis 1,5 mm, entsprechend der Anzahl der Löcher, gewählt. Die Verteilung der Löcher 8 kann auf regelmäßige oder unregelmäßige Art und Weise erfolgen, wobei diesbezüglich darauf geachtet wird, eine Anpassung an das zu erwartende Schallfeld, insbesondere was die Verteilung bzw. den Bereich der auftretenden Frequenzen betrifft, zu erzielen.

Der zwischen der Rückwand 5 und der Außenhülle 6 verbleibende Raum ist über eine Luftzufuhrleitung 7 mit Luftdruck beaufschlagbar. Dadurch wird zwischen der Rückwand 5 und der Außenhülle 6 ein Abstand von einigen Zentimetern eingestellt, der je nach Auslegung insbesondere 1 bis 10 cm beträgt. Die Vorrichtung 4 wird daher durch den Überdruck als absorbierendes Element aktiviert, wobei der Überdruck mittels einer nicht dargestellten Pumpe aufrecht erhalten wird. Zusätzlich erlaubt eine Variation der Größe des Luftdruckes eine weitere Beeinflussung der Schallabsorptionseigenschaften der Vorrichtung 4. Dabei hat der Überdruck günstigerweise noch die Wirkung, daß für einen ständigen Luftstrom über die Löcher 8 nach außen gesorgt wird, und somit einerseits ein Zusetzen der Löcher 8 durch Schmutz und andererseits das Eindringen von Wasser in das Vorrichtungsinnere verhindert wird. Bei Radkästen, die das Rad auch seitlich teilweise abdecken, hat eine Anordnung der Vorrichtung 4 an der Innenwand des seitlich abdeckenden Teiles femer den Vorteil, daß durch den Luftstrom eine Kühlung des Reifens erzielt wird.

Im Innenraum der Vorrichtung 4 kann ferner zusätzlich ein poröses schalldämmendes Material 9, wie beispielsweise Schaumstoff, Glaswolle, Steinwolle oder dergleichen angeordnet werden. Dieses Material kann auch als schalldämmende Schicht auf der Rückwand 5 der Vorrichtung 4 oder direkt am Radkasten, falls keine gesonderte Rückwand vorgesehen ist, angebracht werden.

Zusätzlich kann zwischen der Rückwand 5 und der Außenhülle 6 eine Stützkonstruktion, die jedoch nicht dargestellt ist, vorgesehen werden, um von vornherein eine gewisse Formung der Vorrichtung 4 zu erzielen.

Fig. 2b und Fig. 3b zeigen eine weitere Ausführungsform einer schallabsorbierenden Vorrichtung 4. Auch bei dieser Variante besteht die Vorrichtung 4 aus einer Rückwand 5' und einer Außenhülle 6', wobei letztere aus einem starren, demnach biegeharten Material, beispielsweise einem entsprechenden Kunststoff besteht, und der Radkastenform angepaßt ist. Die Außenhülle 6' ist ebenfalls mit Löchern 8' mit bevorzugt kreisförmigem Querschnitt versehen, die unterschiedliche Durchmesser aufweisen. Zusätzlich ist bei dieser Ausführungsform eine biegeweiche Membran oder Folie 10 vorgesehen, die an der Außenseite der Außenhülle 6' angeordnet bzw. befestigt ist. Die biegeweiche Membran 10 verschließt die Löcher 8' und schützt somit das Innere der Vorrichtung vor Staub und Wasser. Die insbesondere aus einem Gummi- oder Kunststoffmaterial bestehende Membran wird relativ dünn ausgeführt, wobei sie bezüglich ihrer Dicke und viskoelastischen Eigenschaften so ausgelegt sein soll, daß einerseits die Schallabsorption der Vorrichtung möglichst wenig beeinflußt wird und andererseits jedoch eine ausreichende mechanische Festigkeit gewährleistet ist. Der Innenraum der Vorrichtung 4 wird vorteilhafterweise mit einem schallabsorbierenden Material 9' ausgefüllt. Es ist weiters günstig, wenn auch bei dieser Ausführungsform über eine Luftzufuhrleitung 7' eine Beaufschlagung des Innenraumes der Vorrichtung mit Druckluft erfolgen kann, um durch die damit einhergehende Dehnung der Membran 10 auf dieser anhaftenden Schmutz, Schnee oder dergleichen zu entfernen. Alternativ zu der dargestellten Anbringung der Membran 10 kann diese auch an der Innenseite der Außenhülle 6' angebracht werden.

Eine Ausführung der Vorrichtung mit einer starren bzw. biegeharten Außenhülle 6' hat den Vorteil, daß der Lochdurchmesser materialbedingt größer gewählt werden kann als bei der Ausführungsvariante mit einer biegeweichen Außenhülle. Bevorzugt wird dabei der Lochdurchmesser zwischen 5 und 25 mm gewählt, aus Gründen der erwünschten Schallabsorption im allgemeinen jedoch ≤ 30 mm.

Wird der Innenraum der in Fig. 2b dargestellten Vorrichtung geteilt bzw. kassettiert, indem durch längs- und querverbindende Teile eine Aufteilung in Einzelvolumina erfolgt, wird ein System von Helmholtz-Resonatoren realisiert. Jedem dieser Helmholtz-Resonatoren ist ein Loch der Außenhülle bzw. der Lochplatte zugeordnet. Die durch diese Kassettierung entstehenden Resonator-Volumina und die zugehörigen entsprechenden Lochgrößen werden dabei so aufeinander abgestimmt, daß die gewünschte breitbandige Absorption durch viele, räumlich benachbarte schmalbandige Resonatoren mit unterschiedlicher maximaler Absorptionsfrequenz erreicht wird.

Eine weitere Möglichkeit von im Rahmen der gegenständlichen Erfindung einsetzbaren Schallabsorbem besteht im Einsatz von Schallabsorbem, die auf Geräuschanteile, deren Frequenzen sich proportional zur Raddrehzahl ändern, abgestimmt und aktiv angepaßt werden können. Dadurch werden gezielt jene speziellen Geräuschanteile im Reifen/Fahrbahngeräusch von Reifen, die Frequenzen, die sich proportional zur Raddrehzahl ändern, entsprechen, in bestimmten Bereichen weitgehend minimiert bzw. sogar eliminiert.

Dazu eignen sich beispielsweise Absorber, die auf dem Grundprinzip von Helmholtz-Resonatoren aufbauen. Wie bekannt besteht ein Helmholtz-Resonator grundsätzlich aus einem Hohlraum, dessen kompressives Luftvolumen V wie eine Feder wirkt, während die Luftmasse im Resonatorhals, welcher eine bestimmte Länge und eine bestimmte Querschnittsfläche aufweist, die schwingende Masse bildet. Es geht nun grundsätzlich darum, den Eigenfrequenzbereich von Resonatoren (Frequenzbereich maximaler Absorption) dem aktuellen Reifengeräusch anzupassen.

Die zur Anpassung bzw. Veränderung des Frequenzbereiches der maximalen Absorption zu treffenden Maßnahmen basieren darauf, daß der Eigenfrequenzbereich eines solchen Resonators direkt proportional der Querschnittsfläche des Resonatorhalses und umgekehrt proportional zur Wurzel des Volumens des Hohlraumes und zur Wurzel der Länge des Resonatorhalses ist.

Fig. 4 zeigt eine mögliche Ausführungsform solcher Resonatoren 10, die nebeneinander angeordnet sind und unterschiedlich große Resonatorhohlräume 20 besitzen. Die Wände der Resonatorhohlräume 20 können beispielsweise aus Kunststoff bestehen. Jeder Resonatorhohlraum 20 ist mit einem Resonatorhals versehen, welcher als doppelwandiger Balg 30 aus Gummi oder Kunststoff ausgeführt ist. Auf den Bälgen 30 sitzen Platten 50, die die Resonatoröffnungen 50a aufweisen. Über eine Luftzufuhrleitung 14 können die Bälge 30 gleichzeitig mit Druckluft beaufschlagt werden, so daß die Resonatorhalslänge durch entsprechende Druckänderungen verändert werden kann. Dies ist durch die Doppelpfeile in Fig. 4 angedeutet. Im dargestellten Ausführungsbeispiel sind die doppelwandigen Bälge 30 gleich dimensioniert.

Die tatsächlichen Abmessungen der Resonatoren sowie ihr jeweiliger Regelbereich wird auf die zu beeinflussenden Geräuschanteile im Reifen/Fahrbahngeräusch des jeweils betrachteten Reifens angepaßt.

Fig. 5 zeigt zwei Grundprinzipien einer möglichen Regelung und Steuerung von Resonatoren gemäß dem Ausführungsbeispiel nach Fig. 4. Die Anordnung umfaßt dabei Resonatoren und Stellglieder, von welchen jeweils ein Resonator 40 und ein Stellglied 44 dargestellt ist, sowie eine elektronische Regeleinrichtung 42.

Die Regeleinrichtung 42 kann als Führungsgröße die Raddrehzahl 41 erhalten, und ermittelt aus der bekannten Gesamtklotzanzahl und den bekannten Schallabstrahlungseigenschaften des jeweiligen Reifens jene Resonatoren, die bezüglich ihrer Resonanzfrequenzen angesteuert bzw. angepaßt werden sollen.

Alternativ dazu kann vor oder an jedem Resonator 40 ein Schallaufnehmer 43 (Mikrofon) angebracht werden, über den der zeitliche Verlauf des einfallenden Schalldruckes aufgenommen wird und an die Regeleinrichtung 42 übertragen wird. In diesem Fall werden von der Regeleinrichtung 42 eine Frequenz- bzw. Ordnungsanalyse durchgeführt und die passenden Resonatoren angesteuert.

Die Regeleinrichtung 42 kann auch so ausgeführt werden, daß sowohl die Raddrehzahl 41 als auch der Schalldruckverlauf als Führungsgrößen eingehen, was die Redundanz des Regelungssystems erhöht und eine adaptive Anpassung der Regelgröße ermöglicht.

Vorteilhafterweise wird in den Resonatoren 40 jeweils ein akustisch/elektrischer Wandler 45, beispielsweise ein Mikrofon, eine Piezofolie oder dergleichen angebracht, über welche die tatsächliche Resonanzfrequenz (Istwert) des jeweiligen Resonators 40 ermittelt wird. Auf diese Weise ist eine Feedbackkontrolle der eingestellten Resonanzfrequenz der Resonatoren 40 möglich.

Die Regeleinrichtung 42 selbst kann in bekannter Weise entsprechende Eingangsfilter, Eingangsverstärker, eine analoge oder digitale Elektronik und die erforderliche Steuerung zur Beeinflussung des Stellgliedes 44 enthalten. Die Ansteuerung der Resonatoren kann beispielsweise elektrisch, pneumatisch oder hydraulisch erfolgen.

Die Resonatoren werden daher in ihrer Anzahl, ihren Einzelvolumina und/oder ihren Impedanzen unter Zwischenschaltung der Steuer- und Regelelektronik an den geschwindigkeitsabhängigen Bedarf angepaßt.

Eine Möglichkeit einer grundsätzlichen Anordnung der Resonatoren am Fahrzeug zeigt Fig. 3. Schematisch dargestellt ist ein Rad 21 mit Reifen in Seitenansicht mit dem darüber angeordneten Radkasten 22. Die hauptsächlichen Abstrahlrichtungen des Reifen/Fahrbahngeräusches im Latscheinlauf und im Latschauslauf sind durch Pfeilbündel angedeutet. Günstig ist es dabei, die Schallfelder vorab zu messen, um die günstigste Anordnung der Resonatoren 23 an der Innenwand des Radkastens 22 zu bestimmen. In den beiden Hauptschallfeldbereichen ist es dabei vorteilhaft, wenn für jeden störenden Peak im Ordnungsspektrum des Reifens zumindest je ein entsprechend abgestimmter und entsprechend ansteuerbarer Resonator 23 vorgesehen ist.

Die gegenständliche Erfindung befaßt sich damit, die Kombination von Schallabsorbern und Reifen möglichst effektiv zu gestalten. Diesbezüglich kommt nun dem Reifen besondere Bedeutung zu, indem im Rahmen der Erfindung Reifen mit einer besonderen Schallabstrahlungscharakteristik vorgeschlagen werden, nämlich Reifen, die vorrangig eine in und gegen die Fahrtrichtung gerichtete Schallabstrahlung und gleichzeitig eine Reduktion der seitlichen Schallabstrahlung bewirken. Dabei werden vor allem entsprechende Ausgestaltungen von Laufstreifenprofilen in Betracht gezogen.

Grundsätzliche mögliche Ausführungsbeispiele von solchen Laufstreifenprofilen sind in Fig. 6 und Fig. 7 dargestellt. In der nachfolgenden Beschreibung werden dabei die dargestellten Laufstreifenprofile jeweils über ihre Breite B, die ihrer Breite in der Bodenaufstandsfläche gemäß E.T.R.T.O.-Standards entspricht, betrachtet. Diese Laufstreifenprofile eignen sich vorzugsweise als Profile für Reifen für Schwerkraftfahrzeuge (LKWs) oder Busse, insbesondere für die Antriebsräder.

Bei der Ausführungsform gemäß Fig. 6 handelt es sich um ein gepfeiltes, laufrichtungsgebundenes Laufstreifenprofil. Dabei ist entlang der Reifenumfangsmittellinie A-A eine breite Umfangsnut 120 angeordnet, die, wie dargestellt, als gerade umlaufende Nut gestaltet sein kann. In jeder Laufstreifenhälfte sind als Hauptrillen breite, diagonal verlaufende Rillen 100 angeordnet, die bei diesem Ausführungsbeispiel, bis auf den Bereich ihrer Einmündungen in die Umfangsnut 120 bzw. ihrer Übergangsbereiche an den Laufstreifenrändem, wo die Rillen 100 jeweils in Querrichtung des Laufstreifenprofils gebogene Endabschnitte aufweisen, zumindest im wesentlichen geradlinig verlaufen. Die in der einen Laufstreifenhälfte verlaufenden Rillen 100 sind durch die gepfeilte Anordnung zu den in der anderen Laufstreifenhälfte verlaufenden Rillen 100 gegenseitig geneigt und schließen mit der Umfangsmittellinie A-A einen Winkel α ein, der zwischen 35 +/- 20°, insbesondere zwischen 35 +/- 10°, gewählt wird. In Umfangsrichtung betrachtet sind die Rillen 100 in der einen Laufstreifenhälfte gegenüber den Rillen 100 in der zweiten Laufstreifenhälfte versetzt angeordnet. Dieser Versatz kann bis zum halben gegenseitigen Abstand benachbarter Rillen 100 durchgeführt werden. Die Anordnung eines solchen Reifens am Fahrzeug erfolgt derart, daß die laufstreifeninnenseitigen Endbereiche der Rillen 100 zuerst in die Kontaktfläche mit dem Untergrund eintreten.

Darüber hinaus sind die Rillen 100 in jeder Laufstreifenhälfte durch relativ schmale, zumindest im wesentlichen in Umfangsrichtung verlaufende Längsrillen 130 miteinander verbunden, wodurch eine Klotzstruktur entsteht. Die mittlere Breite der schmalen Längsrillen 130 wird zwischen 10 und 60 %, insbesondere 20 bis 40 %, der Breite der Rillen 100 gewählt. Der Verlauf der Längsrillen 130 kann um +/- 10°, insbesondere +/- 5°, von der Umfangsrichtung abweichen.

Durch die schmalen Längsrillen 130 werden die breiten Rillen 100 akustisch gekoppelt. Es ist daher vorteilhaft, die Längsrillen 130 gegeneinander in Reifenquerrichtung zu versetzen, sodaß keine fluchtende Anordnung von Längsrillen 130 gegeben ist. Durch den Versatz der Längsrillen 130 entsteht eine Klotzstruktur, bei der sich die Anzahl der Klötze 140 zwischen benachbarten Rillen 100 voneinander unterscheidet, sodaß beim dargestellten Ausführungsbeispiel in jeder Laufstreifenhälfte zwischen benachbarten Rillen 100 abwechselnd jeweils drei Klötze 140 und vier Klötze 140 vorliegen.

Diese Profilgestaltung besitzt durch die Längsrillen 130 gute Abriebs- und Aquaplaningeigenschaften. Dabei ist gleichzeitig sichergestellt, daß eine in und gegen die Fahrtrichtung gerichteten Schallabstrahlung und eine Reduktion der seitlichen Schallabstrahlung erzielt wird.

Der geschilderte Versatz der Längsrillen 130 bewirkt zusätzlich, daß während des Abrollens des Reifens die Energie der am Untergrund anschlagenden Klötze zeitlich verteilt wird, was sich insgesamt günstig auf den Schalldruckpegel auswirkt.

Bei dieser Variante kann auf den dargestellten Versatz der in der einen Laufstreifenhälfte verlaufenden Rillen 100 gegenüber jenen in der anderen Laufstreifenhälfte verlaufenden Rillen 100 verzichtet werden, sodaß die Rillen 100 in die Umfangsnut 120 ohne gegenseitigen Versatz einmünden.

Das Laufstreifenprofil wird derart ausgelegt, daß, in Querrichtung des Profiles betrachtet, die Anzahl der Rillen 100 je nach Reifendimension zwischen 6 und 12, insbesondere zwischen 8 und 10 beträgt. Die mittlere Rillenbreite errechnet sich bei gegebener Reifenbreite (Breite des Reifens gemäß den maximalen Reifenbetriebsmaßen aus E.T.R.T.O. Standards) aus Rillenbreite = √Reifenbreite / y², mit 1,4 ≤ y ≤ 2,6, insbesondere 1,6 ≤ y ≤ 2,1. In diese Formel geht die Reifenbreite als dimensionslose Zahl ein. Die Breite der Rillen 100 wird zumindest im wesentlichen konstant gehalten, wobei insbesondere sämtliche Rillen 100 die gleiche Breite besitzen. Der Querschnitt der Rillen 100 kann U-förmig, V-förmig, symmetrisch oder asymmetrisch, oder dergleichen gestaltet werden. Zusätzlich können an sich bekannte Maßnahmen zur Steinabweisung getroffen werden, etwa Grundanhebungen am Rillengrund.

Die in Umfangsrichtung verlaufende Umfangsnut 120 kann abweichend von der dargestellten Ausführungsform auch wellen- oder zick-zack-förmig gestaltet werden.

Von Vorteil ist es darüber hinaus, wenn der Anteil an breiten Rillen 100, Längsrillen 130 und weiteren, den Negativanteil vermindernden Maßnahmen wie beispielsweise Anschrägungen von Klötzen und dergleichen so gewählt wird, daß insgesamt ein Negativanteil von 20 bis 40 %, bezogen auf die Gesamtfläche in der Bodenaufstandsfläche, entsteht.

Fig. 7 zeigt eine Variante des in Fig. 6 dargestellten Ausführungsbeispieles, bei dem neben einer mittleren Umfangsnut 120' in jeder Laufstreifenhälfte Rillen 100' angeordnet sind, die jeweils über einen Großteil ihrer Längen übereinstimmende Steigung besitzen. Demnach ist diese Profilvariante nicht laufrichtungsgebunden. Die Mündungsbereiche der Rillen 100', und zwar sowohl im Bereich der Umfangsnut 120' als auch an den Laufstreifenrändem sind wiederum derart gestaltet, daß die Rillen 100' jeweils über eine gerundete Knickstelle in der Mitte in die Umfangsnut 120' einmünden bzw. am Laufstreifenrand in die Schulterbereiche hinauslaufen. Die weitere Ausgestaltung des Profiles mit Längsrillen 130' entspricht jener gemäß Fig. 6, ebenso wie die Winkelung der Rillen 100' und deren sonstige Ausgestaltung.

Von der Bodenaufstandsfläche her betrachtet stellt sich bei einem Reifen mit einem derartig gestalteten Laufstreifenprofilen während des Abrollens die Situation ein, daß durch den Verlauf der Hauptrillen der Effekt einer gleichphasigen Schallabstrahlung an den dem Ein- und Auslauf zugewandten und den seitlichen Öffnungen der Profilrillen unterstützt wird. Dabei sind Ausführungen, wo der genannte Winkel zumindest annähernd 30° beträgt, besonders effektiv. Wie bekannt, bilden sich in Profilrillen, die durch den Kontakt mit der Fahrbahn zu Kanälen geschlossen werden, Rillenresonanzen aus. Diese Rillenresonanzen strahlen maximale Schallenergie bei einer der Frequenzen ab, deren zugehörige Wellenlänge 2/(n+1) multipliziert mit der Länge des Kanals entspricht (n ≥ 1). Die Energieverteilung in den angeregten Resonanzen ist abhängig von der Fahrgeschwindigkeit und der Anzahl der Klötze, fahrbahnabhängigen Parametern, wie beispielsweise Rauhtiefe und Porenvolumen des Fahrbahnbelages, und spezifischen Eigenmoden des Reifenaufbaus. Da beide offenen Enden eines solchen Kanals kohärent abstrahlen, bildet sich ein räumliches Interferenzmuster aus mit Abstrahlungsrichtungen mit konstruktiver Interferenz, was einer Schallverstärkung, und destruktiver Interferenz, was einer Schallauslöschung entspricht. Bei einem nach der Erfindung gestalteten Laufstreifenprofil bildet sich das Interferenzmuster etwa derart aus, daß eine Schallabstrahlung vorrangig in und gegen die Fahrtrichtung erfolgt, seitlich des Reifens jedoch eine stark verminderte Schallabstrahlung. Durch die Längsrillen besitzt das Profil gute Abriebs- und Aquaplaningeigenschaften. Um die Längsrillen akustisch möglichst weitgehend zu entkoppeln ist ein Versatz von Vorteil, da dadurch eine Koppelung weitgehend ausgeschlossen wird. Durch den Versatz der Längsrillen wird ferner die Energie der aufschlagenden Klötze zeitlich verteilt und einem Ausschnappen der Klötze entgegengewirkt.

Bei beiden dargestellten Varianten können zusätzlich zu den dargestellten bzw. beschriebenen Rillen und Nuten Lamellenfeineinschnitte, schmale, zusätzliche Einschnitte und dergleichen vorgesehen werden.

Darüber hinaus ist es möglich, durch sogenannte Grundanhebungen in den Rillen und den Längsrillen, Anbindungen von Klötzen aneinander vorzunehmen, was für die Profilstabilität von Vorteil ist.

Bei beiden Ausführungsvarianten kann eine Pitchlängenvariation, die aus dem Stand der Technik hinlänglich bekannt ist, vorgenommen werden.

Fig. 6a und Fig. 6b veranschaulichen anhand einer Abbildung eines gemessenen Schallfeldes und eines ermittelten Frequenzspektrums die Wirksamkeit von erfindungsgemäß ausgeführten Reifen. Fig. 6a zeigt in graukodierter, dreidimensionaler Darstellung die vom Reifen in seitliche Richtung, durch eine Ebene parallel zur Reifenlaufrichtung, senkrecht zum Boden und in ca. 20 cm seitlicher Entfernung von der Reifenseitenwand abgestrahlte Schallintensität bzw. Schalleistung. Die Messungen erfolgten auf einem Trommelprüfstand bei einer Geschwindigkeit von 70 km/h. In der Darstellung sind die Abmessungen des Reifens, der Felge und der Trommel, auf der der Reifen abläuft, skizziert. Die Strichmarkierungen am die Darstellung umschließenden Rechteck zeigen das Meßgitter. An jedem Kreuzungspunkt der diese Markierungen verbindenden senkrechten und waagrechten Linie wurde die Schallintensität senkrecht zur Zeichnungsebene bestimmt und als Grauwert dargestellt. Die Skala am Fuße der Darstellung zeigt jeweils die jeder Graustufe zugeordnete Schalleistung in dB.

Fig. 6a zeigt das mit einem Reifen, dessen Profil gemäß Fig. 6 ausgerüstet war, gemessene Schallfeld. Die Schallabstrahlung in seitlicher Richtung ist ausgesprochen gering. Das Frequenzspektrum (Fig. 6b) zeigt wenige ausgeprägte Spitzen und eine geringe Schalleistung.

## Patentansprüche

1. Fahrzeug, insbesondere Kraftfahrzeug, mit mit Reifen (2) bestückten Rädern und mit zumindest einer am Radkasten (22) im Bereich von Abstrahlungsrichtungen des Reifen/Fuhrbahn geräusches angebrachten schallabsorbierenden Vorrichtung, wobei der zugehörige Reifen (2) ein Laufstreifenprofil mit einer Schallabstrahlungscharakteristik mit bevorzugter Schallabstrahlung in und gegen die Fahrtrichtung aufweist, **dadurch gekennzeichnet, daß** das Laufstreifenprofil des zugehörigen Reifens ein Schallinterferenzmuster aus bildet mit Abstrahlungsrichtungen mit konstruktiver Interferenz in und gegen die Fahrtrichtung, was einer Schallverstärkung und mit destruktiver Interferenz seitlich des Reifens, was einer in seitlicher Richtung reduzierten Schallabstrahlung, entspricht.

2. Fahrzeug nach Anspruch 1, **dadurch gekennzeichnet, daß** der Reifen ein Laufstreifenprofil mit Rillen (100, 100^{l}) aufweist, die beim Abrollen des Reifens im Ein- und Auslauf eine zumindest im wesentlichen gleichphasige Schallabstrahlung bewirken.

3. Fahrzeug nach einem der Ansprüche 1 oder 2, **dadurch gekennzeichnet, daß** die schallabsorbierende Vorrichtung passiv wirkende Schallabsorber umfaßt.

4. Fahrzeug nach einem der Ansprüche 1 bis 3, **dadurch gekennzeichnet, daß** die schallabsorbierende Vorrichtung Schallabsorber umfaßt, die auf Geräuschanteile im Reifen/Fahrbahngeräusch, deren Frequenzen sich proportional zur Raddrehzahl ändern, aktiv abstimm- und anpaßbar sind.

5. Fahrzeug nach einem der Ansprüche 1 bis 4, welches ein Lastkraftwagen oder ein Bus ist.

## Claims

1. Vehicle, more especially an automotive vehicle, having wheels which are fitted with tyres (2), and having at least one soundabsorbing device which is situated on the wheel housing (22) in the region of radiation directions of the tyre/roadway noise, the associated tyre (2) having a tread strip profile with a sound radiation characteristic with preferred sound radiation in and in opposition to the direction of travel, **characterised in that** the tread strip profile of the associated tyre forms a sound interference pattern with radiation directions with constructive interference in and in opposition to the direction of travel, this corresponding to an amplification of sound, and with destructive interference laterally of the tyre, this corresponding to a sound radiation which is reduced in the lateral direction.

2. Vehicle according to claim 1, **characterised in that** the tyre has a tread strip profile with grooves (100, 100') which, during the rolling motion of the tyre, cause a sound radiation, which is at least substantially cophasal, in the inlet and outlet.

3. Vehicle according to one of claims 1 or 2, **characterised in that** the sound-absorbing device includes passively acting sound absorbers.

4. Vehicle according to one of claims 1 to 3, **characterised in that** the sound-absorbing device includes sound absorbers which can be actively adjustable and adaptable to noise levels in the tyre/roadway noise, the frequencies of which noise levels change in proportion to the wheel speed.

5. Vehicle according to one of claims 1 to 4, which is a heavy goods vehicle or a bus.

## Revendications

1. Véhicule, en particulier véhicule à moteur, comportant des roues équipées de pneumatiques (2) ainsi qu'au moins un dispositif d'absorption du bruit rapporté sur l'arche de roue (22), dans la zone des directions du rayonnement du bruit pneumatique/chaussée, dans le cas duquel le pneumatique correspondant (2) présente un profil de la bande de roulement à caractéristique de rayonnement du bruit avec rayonnement préférentiel du bruit dans la direction de l'avancement du véhicule et dans la direction opposée, **caractérisé par** le fait que le profil de la bande de roulement du pneumatique correspondant est un dessin pour interférence du bruit, conçu avec des directions du rayonnement du bruit donnant une interférence constructive dans la direction de l'avancement du véhicule et dans la direction opposée, ce qui correspond à une amplification du bruit, et donnant une interférence destructive sur le côté du pneumatique, ce qui correspond à un rayonnement du bruit réduit en direction latérale.

2. Véhicule selon la revendication 1, **caractérisé par** le fait que le pneumatique présente un profil de la bande de roulement avec des cannelures (100, 100') qui, lorsque le pneumatique roule, opèrent à l'entrée et à la sortie de la zone d'aplatissement du pneumatique un rayonnement du bruit au moins sensiblement en phase.

3. Véhicule selon l'une des revendications 1 ou 2, **caractérisé par** le fait que le dispositif d'absorption du bruit comporte des organes d'absorption du bruit à action passive.

4. Véhicule selon l'une des revendications 1 à 3, **caractérisé par** le fait que le dispositif d'absorption du bruit comporte des organes d'absorption du bruit qui peuvent s'accorder et s'adapter activement aux composantes du bruit pneumatique/chaussée, dont les fréquences se modifient proportionnellement à la vitesse de rotation des roues.

5. Véhicule selon l'une des revendications 1 à 4, qui est un poids lourd ou un autobus.
